# EUROPÄISCHE PATENTSCHRIFT

(11) **EP 1 297 398 B1**
(45) Veröffentlichungstag und Bekanntmachung des Hinweises auf die Patenterteilung: **13.10.2004**
(21) Anmeldenummer: 01960419.8
(22) Anmeldetag: 29.06.2001
(51) Int. Cl.: G05D 23/19

(54) **VERFAHREN UND VORRICHTUNG ZUM THERMISCHEN BEHANDELN VON OBJEKTEN**
METHOD AND DEVICE FOR THERMALLY TREATING OBJECTS
PROCEDE ET DISPOSITIF POUR TRAITEMENT THERMIQUE D'OBJETS

(30) Priorität: 04.07.2000 DE 10032465
(43) Veröffentlichungstag der Anmeldung: 02.04.2003
(73) Patentinhaber: Mattson Thermal Products GmbH, 89160 Dornstadt (DE)
(72) Erfinder: BLERSCH, Werner, 88477 Bussmannshausen (DE); URBAN, Jochen, 89233 New-Ulm (DE); PAUL, Silke, 89075 Ulm (DE); RUBY, Uwe c/o Mattson Thermal Products GmbH, 89160 Dornstadt (DE); HAUF, Markus, 89335 Ichenhausen (DE)
(74) Vertreter: Wagner & Geyer
(86) Internationale Anmeldenummer: PCT/EP2001/007435
(87) Internationale Veröffentlichungsnummer: WO 2002/003160

(56) Entgegenhaltungen:
- US-A- 4 761 538
- US-A- 5 593 608
- US-A- 5 634 590

## Beschreibung

Die vorliegende Erfindung bezieht sich auf ein Verfahren und eine Vorrichtung zum thermischen Behandeln von Objekten in einer Heizanlage, insbesondere von Halbleiterwafem in einer Schnellheizanlage, bei dem die Objekte mit einem vorgegebenen Temperaturverlauf thermisch behandelt werden und die Temperatur des Objekts mit einer entsprechenden Temperaturregelung, z.B. einer PID-Regelung und einer Vorwärtssteuerung geregelt wird, die auf einem Simulationsmodell aus Heizvorrichtung und Objekt basiert.

Derartige Verfahren und Vorrichtungen sind in der Technik bekannt, siehe z.B. US 5 593 608, Beispielsweise ist es in der Halbleiterindustrie zur Herstellung elektronischer Bauteile üblich, scheibenförmige Halbleitersubstrate mittels Heizlampen mit hohen Heizraten von mehr als 100 °C pro Sekunde thermisch zu behandeln. Dabei folgt die thermische Behandlung in der Regel einem vorgegebenen zeitlichen Temperaturprofil. Um dieses Temperaturprofil zu erreichen, ist eine Regelung der von den Lampen emittierten Heizleistung notwendig. Indem die Heiztampen mit einem vorgegebenen Leistungsprofil angesteuert werden, folgt die Wafertemperatur einem bestimmten Temperaturverlauf. Dabei ist jedoch zu beachten, daß zwischen der von den Lampen abgegebenen Strahlungsleistung und der Temperatur des Wafers kein lineares Verhältnis besteht, was auf unterschiedliche Effekte zurückzuführen.ist, insbesondere dem Stefan-Boltzmannschen Gesetz (wie dies z.B. in US 4,761,538 beschrieben ist), aber auch beispielsweise der Form einer Prozeßkammer, der Anordnung verschiedener Elemente innerhalb der Prozeßkammer, der Position des Wafers bezüglich der Heizlampen, etc. Daher ist eine einfache Steuerung des Temperaturprofils über eine vorgegebene Ansteuerung der Lampen nicht möglich.

Aus diesem Grund erfolgt eine ständige Überwachung der momentanen Wafertemperatur mit gleichzeitiger Nachregelung derselben bei einer Abweichung von einem Soll-Temperaturwert. Dabei werden zwei unterschiedliche Regelprozesse eingesetzt, nämlich ein geschlossener Temperaturregelkreis, z.B. eine PID-Regelung einerseits und eine sogenannte Vorwärtssteuerung andererseits.

Im Folgenden soll von Regelung gesprochen werden, wenn wenigstens eine Größe eines Systems auf einen Wert (oder innerhalb eines Intervalles um diesen Wert) gebracht werden soll, wobei diese Größe auf eine Regelvorrichtung zurückgeführt wird, so daß die Regelvorrichtung abhängig von der betrachteten Größe des Systems den gewünschten Wert möglichst optimal einstellt. Dabei kann die Größe unmittelbar im System z.B. durch Messung erfaßt werden, sie kann aber auch z.B. aus einem Modell, welches das System möglichst gut wiedergibt resultieren. Hierbei spricht man von modellbasierter Regelung. Ebenso kann bei Systemen, die hinsichtlich mehrerer Größen geregelt werden, eine Kombination aus modellbasierter und erstgenannter Rückführung der Größen vorliegen. Im allgemeinen bezeichnet man die Rückführung derartiger Größen als Rückkopplung.

Im Gegensatz zur Regelung wird bei der Steuerung nicht die zu steuernde Größe des Systems auf eine Steuervorrichtung zurückgeführt. Die zu steuernde Größe wird bei der Steuervorrichtung z.B. durch ein Modell bestimmt und/oder über eine andere Größe als der zu steuernden Größe gesteuert.

Bei einem geschlossenen Temperaturregelkreis wird der momentane Ist-Wert der Wafertemperatur mit einem vorgegebenen Soll-Wert verglichen. Bei Abweichungen zwischen den beiden Werten greift eine Regelvorrichtung ein und sorgt für ein Angleichen der beiden Werte, indem beispielsweise die Heizlampen stärker oder geringer angesteuert werden. Je größer die Regeldifferenz ist, um so stärker ist die Nachregelung. Nachteile dieser Regelung sind a), daß die Regelvorrichtung nicht über zukünftige Änderungen des Soll-Wertes informiert ist und b), daß die Wafereigenschaften nicht in Betracht gezogen werden, die sich während des Regelvorganges ändern können, weshalb eine solche Regelung nicht vorausschauend reagieren kann.

Diese Nachteile werden durch eine Vorwärtssteuerung ausgeglichen, die neben einer bisherigen Entwicklung, dem Soll-Wert und dem momentanen Ist-Wert auch die zukünftige Entwicklung des Soll-Wertes in den Regelungsprozeß mit einbezieht. Dadurch wird die Anpassung des Ist-Wertes an den Soll-Wert genauer, da die Regelvorrichtung zukünftige Änderungen des Soll-Wertes in die Regelung mit einbezieht.

Für eine noch genauere Regelung wird ein zukünftiges Verhalten des Ist-Wertes im voraus berechnet, und zwar anhand eines Simulationsmodells bestehend aus Heizvorrichtung und zu behandelndem Objekt bzw. Wafer. In diesem Fall spricht man von vorhersage-geregelten Prozessen. Da die Wärmekapazitäten einzelner Kammerkomponenten bekannt sind und bekannt ist, welche Lampenleistung in die Kammer eingestrahlt wird, läßt sich die Wafertemperatur sowie ihre künftige Entwicklung in Abhängigkeit vom Verlauf des Profils der Heizleistung im voraus durch die Vorhersage des Simulationsmodells abschätzen.

Diese Abschätzung, die bisher auf einem starren Simulationsmodell erfolgte, ist jedoch sehr schwierig, da die verschiedenen Komponenten in der Prozeßkammer einschließlich der Heizvorrichtung und des zu behandelnden Objekts ein nichtlineares System darstellen. Trotz dieser Schwierigkeiten läßt sich bei diesem Verfahren die Anpassung des Verlaufs der Wafertemperatur an das Soll-Profil verbessern.

Wie schon erwähnt, behandeln solche Simulationsmodelle die Kammer mit allen ihren Einzelkomponenten und dem Wafer zusammen als ein System. Zwischen einzelnen Systemkomponenten wird nicht unterschieden. Darüber hinaus werden die bisher bekannten Simulationsmodelle einmal aufgestellt und anschließend nicht mehr geändert, insbesondere nicht während eines Prozesses, d.h. während das Objekt eine Temperatur-Zeit-Behandlung erfährt. Veränderungen innerhalb des Systems, beispielsweise bei der Behandlung unterschiedlicher Wafer (Objekte) mit unterschiedlichen optischen Eigenschaften können nicht berücksichtigt werden. Insbesondere können prozessverlaufs- und/oder alterungsbedingte Veränderungen wie z.B. die von einer Heizlampe abgegebene Strahlung oder andere Änderungen innerhalb der Kammer nicht berücksichtigt werden. Prozeßverlaufsbedingte Änderungen sind beispielsweise Erwärmungen der Prozeßkammer, bestehend z.B. aus Quarzglas, und die damit zusätzliche entstehende Wärmeabstrahlung in einem von der Lampenstrahlung im allgemeinen unterschiedlichen Wellenlängenspektrum.

Ausgehend von diesem Stand der Technik liegt der vorliegenden Erfindung daher die Aufgabe zugrunde, ein Verfahren und eine Vorrichtung zum thermischen Behandeln von Objekten in einer Heizanlage vorzusehen, die eine bessere Regelung eines Temperaturprofils eines zu behandelnden Objekts erlaubt.

Erfindungsgemäß wird diese Aufgabe dadurch gelöst, daß das Simulationsmodell wenigstens ein Einzelmodell umfaßt, welches Komponenten der Heizvorrichtung und/oder des Objekts umfaßt, und daß wenigstens ein Parameter wenigstens eines der Einzelmodelle während der thermischen Behandlung überwacht und daß das Simulationsmodell wenigstens an einen der überwachten Parameter angepaßt wird. Hierdurch ergibt sich der Vorteil, daß das Simulationsmodell dynamisch an sich verändernde Betriebsbedingungen, wie beispielsweise altersbedingte Veränderungen der Heizleistung der Lampen, Objekte mit unterschiedlichen optischen Eigenschaften, etc. angepaßt werden kann. Durch die Anpassung des Simulationsmodells ist eine genauere Regelung des Temperaturverlaufs des zu behandelnden Objekts insbesondere auch deshalb möglich, da auch vorteilhaft prozeßverlaufsbedingte Änderungen wie z.B. die oben genannte Erwärmung von z.B. Prozeßkammer (insbesondere auch die darin enthaltenen Quarzteile), bei der Temperaturregelung berücksichtigt werden können. Dies kann z.B. vorteilhaft zur Reduktion des sogenannten "first wafer"-Effekts eingesetzt werden. Hierbei handelt es sich um den Einfluß der Prozeßkammertemperatur auf das Prozeßergebnis bei der Prozessierung von Wafern, wenn z.B. die Prozeßkammer beim Prozessieren der ersten Wafer noch nicht ihre mittlere "Betriebstemperatur" erreicht hat. Dieser Effekt tritt immer zu Beginn von z.B. einer Massenproduktion auf oder wenn zwischen dem Prozessieren einzelner Wafer soviel Zeit ist, daß die Prozeßkammer auf Temperaturen abkühlen kann, die unter denen bei z.B. Massenproduktion liegt. Dadurch können anlagenbedingt die Prozeßergebnisse vom Durchsatz der Wafer abhängig werden, was natürlich unerwünscht ist. Gemäß einer bevorzugten Ausführungsform der Erfindung wird das Objekt mit wenigstens einer Heizlampe einer Heizvorrichtung bestrahlt. Vorzugsweise ist für wenigstens eine Heizlampe der Heizvorrichtung ein Einzelmodell mit wenigstens einem überwachten Parameter vorgesehen, und es werden Betriebsparameter der Heizlampe, insbesondere die abgestrahlte Heizleistung in Relation zur Ansteuerleistung, überwacht, um Veränderungen festzustellen und gegebenenfalls das Simulationsmodell anzupassen.

Bei einer weiteren bevorzugten Ausführungsform der Erfindung ist für das zu behandelnde Objekt ein Einzelmodell vorgesehen und Parameter des zu behandelnden Objekts, insbesondere dessen optische Eigenschaften, werden überwacht, um gegebenenfalls eine Anpassung des Simulationsmodells vorzunehmen. Von besonderer Bedeutung sind die Absorptionseigenschaften (bzw. im allgemeinen die optischen Eigenschaften wie Transmission, Absorption oder Reflexion) des zu behandelnden Objekts bzw. die Kopplung an die Heizstrahlung bei unterschiedlichen Temperaturen, welche die Regelung, insbesondere eine Vorwärtssteuerung stark beeinflussen können, da diese Eigenschaften für z.B. Si-Wafer stark temperaturabhängig sind. Vorzugsweise werden die Parameter auf gegenüberliegenden Seiten des Objekts getrennt voneinander ermittelt.

Für eine weitere Optimierung des gesamten Modells werden die Datenübertragungszeiten und/oder die Rechenzeiten ermittelt und hierfür vorgesehene Einzelmodelle werden an die ermittelten Werte angepaßt. Bei einigen Meßvorrichtungen, wie beispielsweise Pyrometern, ist eine Temperaturermittlung des Objekts unter 400°C nicht oder nur sehr schwer möglich. Daher werden die Temperaturen des Objekts unter 400°C vorzugsweise nachträglich anhand des Simulationsmodells berechnet, und diese errechneten Daten werden in der Regelung aufgenommen.

Die der Erfindung zugrunde liegende Aufgabe wird auch bei einer Vorrichtung zum thermischen Behandeln von Objekten, insbesondere von Halbleiterwafem, mit einer Heizvorrichtung, insbesondere einer Schnellheizvorrichtung, einer Regeleinheit mit einem Temperatur-Regler und einer Vorwärtssteuerung, der ein Simulationsmodell aus Heizvorrichtung und Objekt verwendet, dadurch gelöst, daß eine Überwachungseinheit vorgesehen ist zum Abtasten von für das Simulationsmodell relevanten Parametern von Komponenten der Heizvorrichtung und/oder des Objekts, zum Vergleichen der gemessenen Parameter mit den Parametern des Simulationsmodells und zum Anpassen der Parameter des Simulationsmodells an die gemessenen Parameter. Bei dieser Vorrichtung ergeben sich die schon oben unter Bezugnahme auf das Verfahren genannten Vorteile.

Die Erfindung wird nachfolgend anhand der Zeichnung näher erläutert; in der Zeichnung zeigt:
- **Fig. 1**: schematisch den Aufbau einer Heizvorrichtung zum thermischen Behandeln von Objekten;
- **Fig. 2**: eine graphische Darstellung eines Ist- und eines Soll-Temperaturprofils bei einer thermischen Behandlung eines Halbleiterwafers mit PID-Regelung;
- **Fig. 3**: eine graphische Darstellung für die Ermittlung der von einer Lampe erzeugten Strahlung;
- **Fig. 4**: eine graphische Darstellung eines Lampenmodells in einem Regelkreis;
- **Fig. 5a und b**: Kurven, welche die Lampenstrahlung bei Spannungssprüngen ohne Strahlungsregler während einer Aufheizphase bzw. während einer Abkühlphase zeigen;
- **Fig. 6a und b**: Kurven ähnlich wie die der Fig. 5a und b, welche die Leistungssprünge mit Strahlungsregler zeigen;
- **Fig. 7**: eine graphische Darstellung einer Vorsteuereinheit;
- **Fig. 8**: eine graphische Darstellung einer erweiterten Vorsteuereinheit.

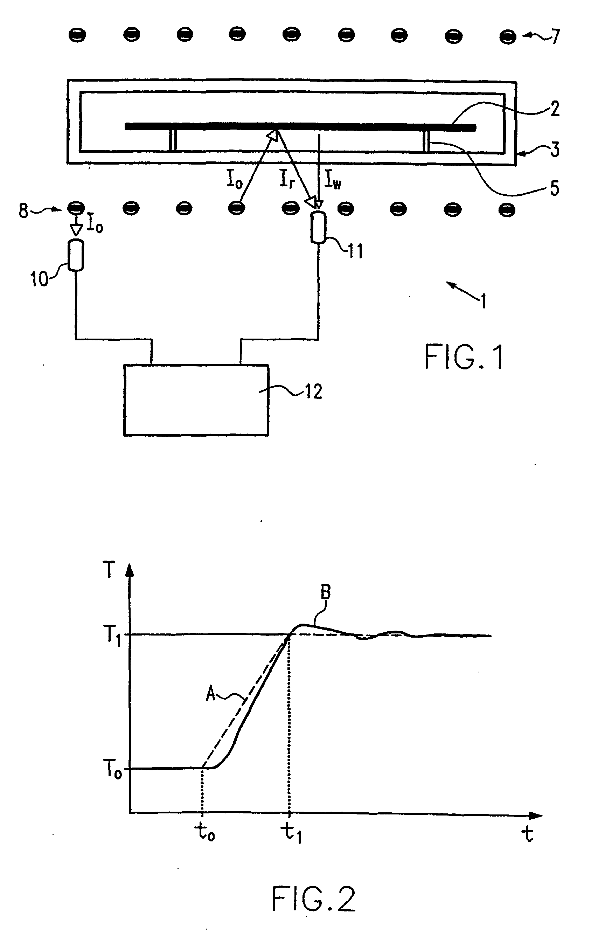

Fig. 1 zeigt schematisch den Aufbau einer Heizvorrichtung 1 zum thermischen Behandeln von Halbleiterwafern 2. Die Vorrichtung 1 weist eine innere, in der Regel aus Quarzglas bestehende Prozesskammer 3 mit Halteelementen 5 zur Aufnahme des Halbleiterwafers 2 auf.

Oberhalb und unterhalb der Prozesskammer 3 sind Lampenbänke 7 und 8 vorgesehen, die durch eine Vielzahl von stabförmigen Lampen wie beispielsweise Wolfram-Halogenlampen oder Bogenlampen gebildet werden. Es kann aber auch nur eine Lampenbank z.B. zum einseitigen Beheizen eines Objekts vorhanden sein. Natürlich können auch andere Lampen verwendet werden. Zum thermischen Behandeln des Wafers 2 werden die Lampen derart angesteuert, dass sie eine bestimmte elektromagnetische Strahlung abgeben, die sowohl in ihrer räumlichen und/oder spektralen Zusammensetzung als auch in ihrer Intensität steuerbar ist.

Während der thermischen Behandlung wird die Temperatur des Wafers gemessen. Hierzu sind zwei Pyrometer, ein Lampenpyrometer 10 einerseits und ein Waferpyrometer 11 andererseits vorgesehen. Das Lampenpyrometer 10 misst die von wenigstens einer Lampe abgegebene elektromagnetische Strahlungsintensität Iₒ, während das Waferpyrometer 11 die von dem Wafer 2 ausgehende Strahlungsintensität I_{w} sowie am Wafer 2 reflektierte Strahlungsintensität Iᵣ und gegebenenfalls auch eine durch den Wafer transmittierte Strahlung misst. Die von den Lampen ausgehende Strahlungsintensität Iₒ besitzt eine bestimmte Modulation, die entweder aktiv, d.h. durch gezielte, definierte und/oder steuerbare Modulation der Strahlung, oder passiv, d.h. durch Ausnutzung systembedingter Strahlungsänderungen, die z.B. durch die Frequenz der Spannungsversorgung entstehen können, erreicht wird. Diese Modulation lässt sich auch in der am Wafer 2 reflektierten Strahlungsintensität Iᵣ erkennen, und daher lässt sich der tatsächlich von dem Wafer 2 ausgehende Teil, der am Waferpyrometer 11 gemessenen Wärmestrahlung in einer Signalauswerteschaltung 12, der sowohl die Signale des Lampenpyrometers 10 als auch des Waferpyrometers 11 zugeführt werden, ermitteln. Einzelheiten dieses Messverfahrens sind beispielsweise in der auf dieselbe Anmelderin zurückgehenden DE-A-198 55 683 beschrieben, auf die insofern Bezug genommen wird, um Wiederholungen zu vermeiden. Die derart gemessene Wafertemperatur wird mit einer Soll-Wafertemperatur im Rahmen z.B. einer PID-Regelung verglichen, es wird eine Regelgröße für die Lampenbänke 7, 8 ermittelt, und sie werden dementsprechend angesteuert.

Fig. 2 zeigt den Soll-Temperaturverlauf A und den Ist-Temperaturverlauf B eines Wafers bei einer herkömmlichen thermischen Behandlung. Die gestrichelte Kurve A zeigt den erstrebten bzw. Soll-Temperaturverlauf für den Wafer und die durchgezogene Kurve B zeigt den Ist-Temperaturverlauf des Wafers. Die gestrichelte Kurve zeigt zunächst eine konstante Temperatur T₀, die in einem Zeitintervall zwischen t₀ und t₁ mit einer konstanten Rate, von beispielsweise 100° C pro Sekunde auf eine Temperatur T₁ ansteigt und anschließend konstant auf dieser Temperatur verweilt. Bei der oben beschriebenen Regelung nach dem Stand der Technik, z.B. einer reinen PID-Regelung, folgt der Ist-Temperaturverlauf des Wafers nicht diesem linearen Verlauf. Vielmehr beginnt das Aufheizen des Wafers erst zu einem späteren Zeitpunkt als bei der Soll-Kurve. Die Aufheizrate bei der Ist-Kurve ist dann größer als bei der Soll-Kurve und die Ist-Kurve geht über die angestrebte Endtemperatur T₁ des Wafers hinaus und pendelt sich dann erst einige Zeit nach dem Zeitpunkt t₁ auf die gewünschte Endtemperatur T₁ ein.

Wie zuvor erwähnt, können die Differenzen zwischen Soll- und Ist-Kurve durch zusätzliches Einbinden einer Vorwärtssteuerung, die eine zukünftige Entwicklung des Soll-Wertes in die Regelung einbezieht sowie ein zukünftiges Verhalten des Ist-Wertes anhand eines Simulationsmodells im Voraus berechnet, verbessert werden. Das dabei bisher verwendete Simulationsmodell ist wie erwähnt ein starres Simulationsmodell.

Gemäß der vorliegenden Erfindung wird das der Regelung zugrunde liegende Simulationsmodell dadurch verbessert, dass eine Anpassung des Simulationsmodells, insbesondere eine Anpassung während des Prozeßablaufs, an sich verändernde Parameter ermöglicht wird. Dies wird dadurch erreicht, dass das Simulationsmodell in Komponenten zerlegt wird und für wenigstens eine oder auch jede Komponente des Modells ein geeignetes Einzelmodell erstellt wird, und daß eine Messung von wenigstens einem Parameter dieses Einzelmodells oder der Einzelmodelle sowie eine anschließende Anpassung von Parametern im Einzelmodell während des Prozesses erfolgt.

Aufgrund dieses Gesamtmodells können Regelparameter für die einzelnen Komponenten festgelegt werden, die schließlich in einer Regelvorrichtung der Gesamtanlage gespeichert werden. Auf diese Weise lässt sich über die Einzelmodelle bzw. deren Regelparameter gezielt der Temperaturverlauf eines Wafers steuern und regeln. Das Gesamtmodell ist an sich verändernde Bedingungen, wie zum Beispiel Veränderungen der gemessenen Parameter anpassbar.

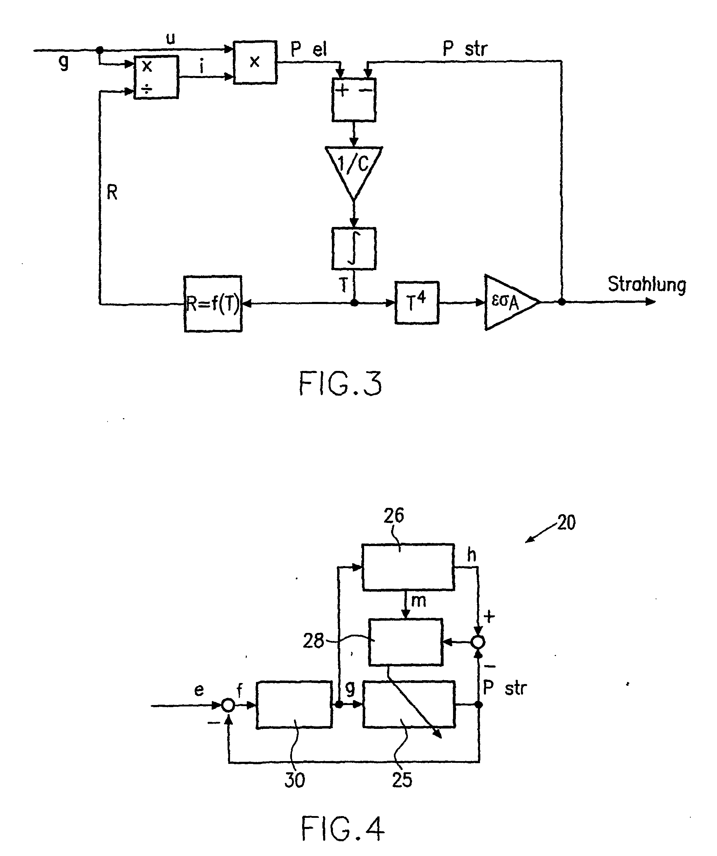

Zum besseren Verständnis der Erfindung wird nachfolgend auf die Figuren 3 bis 8 eingegangen. Fig. 3 zeigt eine grafische Darstellung für die Ermittlung der von einer Lampe erzeugten Strahlung durch eine Kombination aus Modell, Messung und angepasstem Modell mit dessen Integration in einem unterlagerten Strahlungs-Regelkreis. Zunächst wird ein Lampenmodell aufgrund der spezifischen Größen der Lampe erstellt. Charakteristische Größen einer Lampe, die als Modellparameter in Frage kommen, sind der sie durchfließende Strom, die anliegende Spannung, ihr Widerstand, die aufgenommene Leistung und die emittierte Strahlungsleistung. Im statischen Fall ist die von der Lampe aufgenommene elektrische Leistung gleich der emittierten Leistung. Außerdem korreliert die emittierte Strahlungsleistung der Lampe über die Filamenttemperatur direkt mit ihrem Widerstand. Basierend auf diesen Zusammenhängen kann man das in Fig. 3 gezeigt Lampenmodell erstellen, wie es unter anderem auch in J. Urban et al. in dem Artikel ''Thermal Model of Rapid Thermal Processing Systems" in der 7^{th} International Conference on Advanced Thermal Processing of Semiconductors - RTP '99 beschrieben ist, der insofern zum Gegenstand der vorliegenden Erfindung gemacht wird, um Wiederholungen zu vermeiden. Bei diesem Modell wird eine einzelne Lampe durch drei Parameter spezifiziert, nämlich ihre Widerstandskennlinie R = f (T) als Funktion ihrer Temperatur T, ihre Wärmekapazität C (eventuell ebenfalls als Funktion der Temperatur T) und eine die Abstrahlungsleistung bestimmende Konstante εσA. Dabei entspricht ε dem Emissionsgrad, σ der Stefan-Boltzmann-Konstante und A der Fläche, bzw. der effektiven Fläche, des Lampenfilaments.

In das Lampenmodell wird als Stellgröße g die an der Lampe anliegende Spannung u eingegeben. Aus der Spannung und dem Widerstand R, den die Lampe entsprechend ihrer Kennlinie bei einer Temperatur T hat, wird die Größe des durch die Lampe fließenden Stroms i ermittelt. Nach Pₑₗ = u · i bestimmt sich daraus die in der Lampe umgewandelte elektrische Leistung Pₑₗ. Anhand des Abstrahlungsgesetzes von Stefan-Boltzmann lässt sich die von der Lampe emittierte Strahlungsleistung Pₛₜᵣ anhand der Lampentemperatur und den Abstrahlungskonstanten (Emissionskonstanten) ermitteln. Die Strahlungsleistung wird von der umgewandelten elektrischen Leistung abgezogen, wodurch man den Anteil der Leistung, der in der Lampe in Wärme umgewandelt wurde, erhält, die das Filament und die Lampe erwärmt. Mittels der Wärmekapazität c der Lampe, die im wesentlichen durch die Masse des Filamentdrahtes vorgegeben ist, wird eine neue Temperatur T der Lampe berechnet. Dies ist in Fig. 3 durch das 1/c und durch das Integralglied dargestellt. Anhand der neuen Temperatur wird ein neuer Filamentwiderstand R der Lampe und daraus die umgesetzte Lampenleistung Pₑₗ neu ermittelt und zum anderen wird die emittierte Lampenstrahlung Pₛₜᵣ neu ermittelt. Auf diese Weise lässt sich der Einfluss der Stellgröße g auf die von der Lampe emittierte Strahlungsleistung Pₛₜᵣ bestimmen, insbesondere wird das dynamische Verhalten der Lampe beschrieben.

In einem nächsten Schritt werden die in dem Lampen-Modell aufgenommenen Parameter für eine vorgegebene Lampe vermessen. Hierdurch lässt sich das Modell optimieren und auf eine bestimmte Lampe einstellen. Insbesondere werden die Abhängigkeit des Widerstands von der Filamenttemperatur, die Wärmekapazität C des Filaments sowie die Konstanten ε σA ermittelt, wobei c, ε und A auch als Funktion der Temperatur bestimmt werden können. Optional können können auch ε und A an die Temperatur angepaßt werden. Die ermittelten Parameter werden in das Lampenmodell eingesetzt, wodurch sich ein spezifisches Modell für die Lampe ergibt.

Der Einsatz des Lampenmodells aus Fig. 3 in einem Regelkreis 20 ist in Fig. 4 dargestellt. In dem Regelkreis 20 wird die aufgrund des Lampenmodells 25 berechnete Strahlungsleistung Pₛₜᵣ (hier als überwachter Parameter des Lampenmodells) einmal mit der tatsächlichen, mittels eines Pyrometers 26 gemessenen Lampenstrahlung h verglichen. Die Differenz zwischen berechneter und gemessener Lampenstrahlung dient zur weiteren Optimierung des Lampenmodells 25 über eine Modell-Optimierungseinheit 28, die für eine Anpassung von z.B. R, ε, A oder c sorgt. Außerdem wird die berechnete Strahlungsleistung Pᵢₛₜ (=Pₛₜᵣ) mit einem Soll-Strahlungswert e verglichen und die Lampenstrahlung wird anhand der ermittelten Differenz über einen Strahlungsregler 30 geregelt. Die von dem Strahlungsregler 30 ausgegebene Stellgröße g, die einer Effektivspannung entspricht, dient neben der Ansteuerung der Lampen auch als Eingangsgröße für das Lampenmodell. Wie sich aus der obigen Beschreibung ergibt, kann das Lampenmodell, welches bei der Regelung der Temperatur eines Wafers verwendet wird, dynamisch an sich verändernde Bedingungen angepasst werden, indem die tatsächlich von der Lampe abgegebene Strahlungsleistung mit der innerhalb des Modells berechneten Strahlungsleistung verglichen wird. Zusätzlich oder alternativ kann man während des Prozesses andere Lampenparameter m, wie zum Beispiel Strom oder Spannung messen und das Lampenmodell anhand der gemessenen Parameter optimieren. Es ist aber auch möglich, das Lampenmodell zu Beginn mit den gemessenen Parameterwerten zu initialisieren und auf eine prozessbegleitende Optimierung dieser Größen zu verzichten.

Bei dem oben beschriebenen Verfahren ist von besonderer Bedeutung, dass die Stellgröße g, die der Lampenansteuerung dient, nicht mehr wie bisher üblich auf der Grundlage eines Vergleichs zwischen dem Soll-Strahlungswert e und einem gemessenen realen Lampenstrahlungswert bestimmt wird, sondern sich aus dem Soll-Strahlungswert e und der vom Lampenmodell berechneten Lampenstrahlung Pₛₜᵣ ergibt. Dies führt zu einer Erhöhung der Regelgeschwindigkeit und darüber hinaus ergeben sich innerhalb des Regelprozesses weniger Störungen.

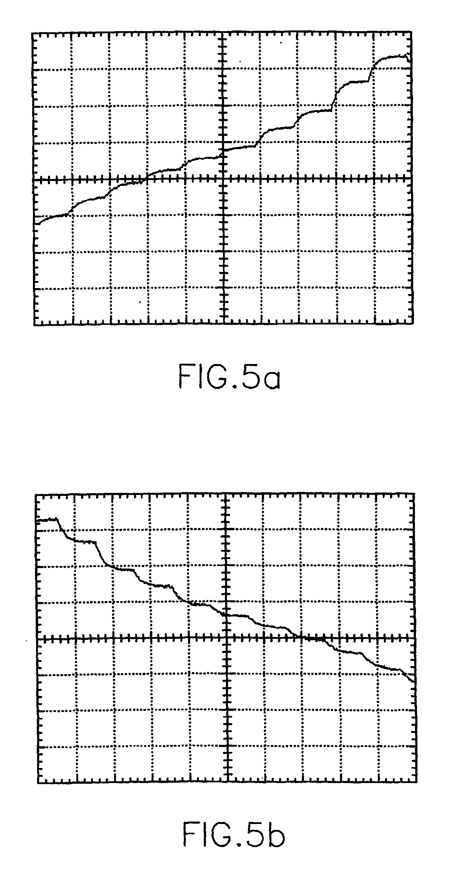

Der Effekt und Vorteil der oben beschriebenen Regelung ist in den Oszillographenbildem 5 a, b und 6 a, b dargestellt. In den Figuren 5a und 5b wurde die Lampe auf konventionelle Art über die Spannung als Stellgröße und ohne Strahlungsregler (Lampenmodell, Lampenmodell-Optimierungseinheit) angesteuert. Dabei zeigt Fig. 5a eine sich erhöhende Strahlungsleistung und Fig. 5b eine sich verringernde Strahlungsleistung. Die Spannung wurde dabei treppenförmig verändert. Wie man den Oszillographenbildern entnehmen kann, spiegelt die von der Lampe abgestrahlte Leistung diesen treppenförmigen Verlauf der Spannung nur stark verfremdet wider. Statt einer stufenförmigen Veränderung der Lampenstrahlungsintensität ist ein wellenförmiger Verlauf zu erkennen.

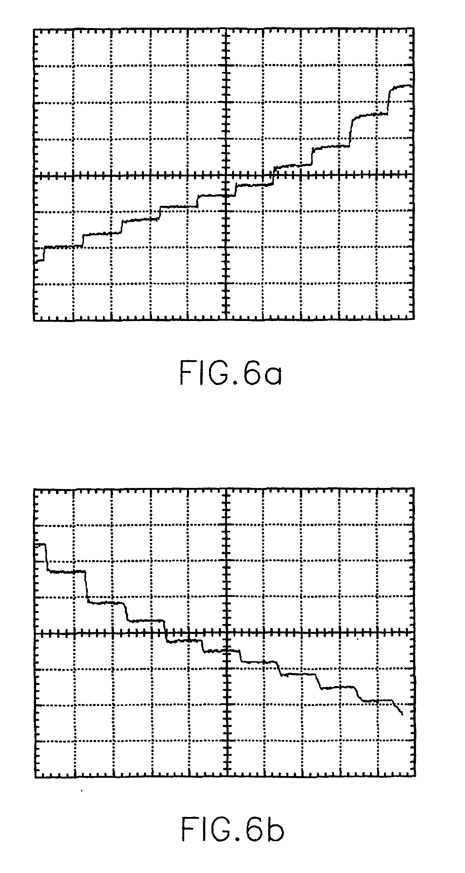

Die Figuren 6a und 6b zeigen wiederum den zeitlichen Verlauf der emittierten Strahlung einer Lampe einmal bei Erhöhung (Fig. 6a) und einmal bei Verringerung (Fig. 6b) der Lampenleistung. In diesem Fall wurden die Lampen über den in Fig. 4 dargestellten Regelkreis angesteuert. Der in den Figuren 6a und 6b gezeigte Verlauf der Strahlungsintensität zeigt einen treppenförmigen Verlauf. Es wurde ein Strahlungsregler verwendet und die vom Modell berechnete Strahlungsintensität als Stellgröße zugrunde gelegt. Beim Vergleich der Oszillographenbilder gemäß Fig. 5a, b und 6a, b ist zu beachten, dass die Y-Achsen unterschiedlich hohe Werte aufzeigen. Dies resultiert daraus, dass bei den Spannungssprüngen tatsächlich nur die Spannung als Stellgröße verändert wird, bei den Leistungssprüngen aber ein Soll-Wert für die StrahlungsLeistung vorgegeben wird. Insgesamt stellen Lampen, die über den in Fig. 4 dargestellten Regelkreis angesteuert werden (Fig. 6 a, b), Stellglieder mit dynamischerem Verhalten dar. Mit ihnen läßt sich auch der Temperaturverlauf des Wafers exakter an ein vorgegebenes Temperaturprofil anpassen.

Bei der Wärmebehandlung eines Wafers kann jede einzelne Lampe der Lampen einer Heizvorrichtung auf diese Weise individuell geregelt werden.

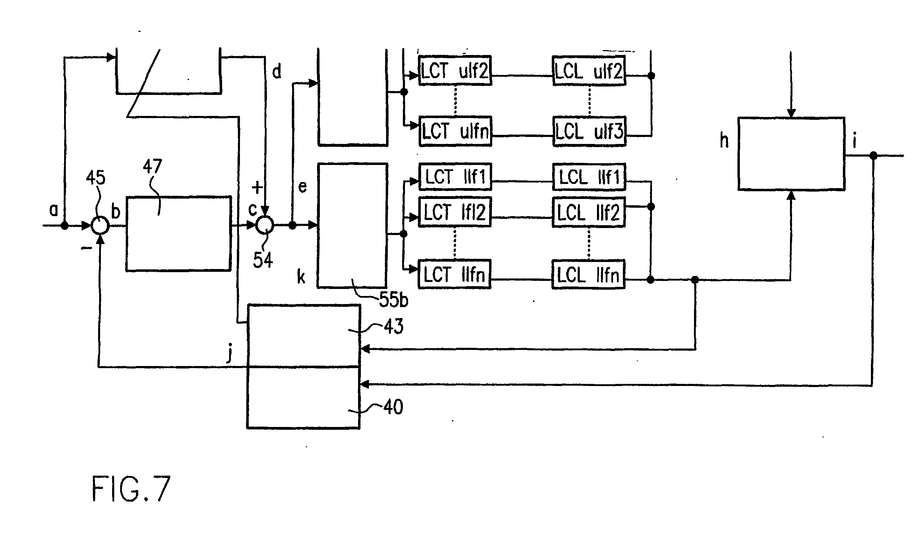

Fig. 7 zeigt eine an die Eigenschaften des Wafers angepasste Vorsteuerung mit einem Vorsteuerregler, der ein Modell des Wafers beinhaltet. Bei der dargestellten Regelung wird die Kopplung des Wafers an die Lampenstrahlung gemessen und anhand der gemessenen Kopplung wird eine an den Wafer angepasste Vorsteuerung erzeugt. Die Vorsteuerregelung erzeugt eine Stellgröße für die einzelnen Lampen bzw. Lampenbänke, die von der Temperatur, der Temperaturänderung, der Wafergröße und eventuell anderen Wafereigenschaften abhängt.

Eine vom Wafer emittierte und reflektierte Strahlung i wird in der Messeinheit 40 gemessen und zur Berechnung der Wafertemperatur j herangezogen. Die vom Wafer emittierte Strahlung i wird ferner in einer Kopplungs-Messeinheit 43 mit einer gemessenen Lampenstrahlung h verglichen, wodurch sich eine Kopplung k des Wafers an die Lampenstrahlung ermitteln lässt. Zur Bestimmung der Kopplung k des Wafers an die Lampenstrahlung wird eine breitbandige aktiv modulierte Messung der von den Lampen und vom Wafer emittierten Strahlung verwendet. Die Messung erfolgt mit zwei Pyrometern, wie es aus der auf dieselbe Anmelderin zurückgehenden DE-A-198 55 683.7 bekannt ist, die insofern zum Gegenstand der vorliegenden Erfindung gemacht wird, um Wiederholungen zu vermeiden. Die Größe der Kopplung k zwischen Wafer und Lampenstrahlung ist von unterschiedlichen Parametern abhängig. Beispielsweise können die Wafer mit verschiedenen Materialien sogar mehrfach beschichtet und/oder strukturiert sein, was neben dem Problem unterschiedlicher Absorptionseigenschaften und nicht homogener Temperaturverteilungen über die Waferoberfläche hinweg auch zu Interferenzeffekten der Heizstrahlung an diesen Schichten führt. Unter dem Begriff der Kopplung k zwischen Wafer und Lampenstrahlung ist der Grad der Wechselwirkung zwischen dem Wafer und dem Strahlungsfeld zu verstehen, also sein Absorptions- und Emissionsgrad über alle vorkommenden Wellenlängen.

Die berechnete Wafertemperatur j wird am Punkt 45 mit einem Temperatur-Sollwert a verglichen. Eine Differenz b aus Soll- und Ist-Wert wird an einen Temperaturregler, z.B. einen PID-Temperaturregler 47 weitergegeben, der aufgrund der Differenz b in bekannter Weise einen Lampen-Ansteuerwert c ermittelt. Der Sollwert a und die berechnete Kopplung k zwischen dem Wafer und der Lampenstrahlung werden an einen Vorsteuerregler 50 geleitet, der einen Vorsteuerwert d in Abhängigkeit von der Wafereigenschaft k liefert. Der Vorsteuerwert d und die Ausgangsgröße c des Temperaturreglers werden am Punkt 54 zu einer Stellgröße e addiert, sodass die aktuelle Stellgröße e aus Berechnungen resultiert, die auf der Basis der letzten Messung ermittelt wurden. Dabei kann das zugrunde liegende Modell auch andere Parameter der Kammer, der Haltevorrichtung oder der Lampen wie z.B. die Quarztemperatur, Umgebungstemperatur usw. beinhalten. Die Stellgröße e wird am Regler 55a, 55b für die obere bzw. untere Lampenbank weitergeleitet.

Alle oberhalb des Wafers befindlichen Lampen sind zur oberen Lampenbank 7 zusammengefasst und die unterhalb des Wafers liegenden Lampen sind zur unteren Lampenbank 8 zusammengefasst. Jede der n Lampen der oberen und unteren Lampenbank besitzt einen individuellen Regelkreis (LCL) wie er unter Bezugnahme auf Fig. 4 beschrieben wurde. Beim Aufheizen in einem homogenen Lampenfeld heizen sich die Randbereiche eines scheibenförmigen Wafers stärker auf als die Wafermitte. Zum Erreichen einer homogenen Temperaturverteilung über den Wafer hinweg müssen daher einzelne Lampen der Lampenbänke unterschiedlich stark strahlen. Zu diesem Zweck sind Kontrolltabellen (LCT) für die einzelnen Lampen vorgesehen. Anhand der Kontrolltabellen wird die Strahlungsstärke jeder einzelnen Lampe während einer thermischen Behandlung eingestellt. Die hierfür erforderlichen Einstelleinrichtungen sind den Lampenregelkreisen vorgeschaltet. Sie werden über die Stellgröße e angesteuert und sorgen für eine gewünschte Lampenstrahlung h. Da die jeweiligen Lampen in unterschiedlichen Situationen unterschiedliches dynamisches Verhalten zeigen, ist es von besonderem Vorteil, dass jede Lampe anhand ihrer individuellen Kennlinie mit einem individuellen Regelkreis gemäß Fig. 4 angesteuert wird. Hierdurch wird ein homogeneres Aufheizen des Wafers insbesondere in den Randbereichen erreicht. Aufgrund der gemessenen Parameter h und i, die eine Aussage über die Kopplung des Wafers an die Lampenstrahlung machen, erhält man Aufschluß über die Modellparameter des Lampenmodells, die daraufhin angepaßt werden können. Insbesondere dann, wenn es sich bei den Lampen um Bogenlampen handelt, erweist sich diese Methode als sehr vorteilhaft. Bemerkt sei, daß die Kontrolltabellen (LCT) selbst wiederum durch ein Einzelmodell beschrieben werden können, welches wiederum mittels wenigstens eines Parameters (z.B. der radialen Wafertemperatur) überwacht und angepaßt werden kann.

Da es sich bei der Waferstrahlung i um die zu regelnde Größe handelt, sie erlaubt nämlich eine Aussage über die Wafertemperatur, und die Kopplungs-Messeinheit 43 diese Strahlung i mit der Lampenstrahlung h vergleicht, handelt es sich um eine Steuerung mit Rückkopplung. Die Lampenstrahlung h selber wird nicht im hier verstandenen Sinne geregelt, mit ihrer Hilfe wird die zu regelnde Größe i lediglich auf einen gewünschten Wert gebracht. Zu diesem Zweck kann die Lampenstrahlung h prinzipiell jeden Verlauf nehmen, der zum vorgegebenen Wert von der zu regelnden Größe i führt; sie ist nur eine Hilfsgröße. Dagegen wird der Messeinheit 40 die zu regelnde Waferstrahlung i zugeführt. Hier hat man es mit einer Regelung oben definierten Sinn zu tun.

Alterungseffekte von Lampen infolge langer Lebensdauer lassen sich durch eine einfache Anpassung ihres Modells mit neuen Parameterwerten schnell und ohne größeren Aufwand ausgleichen. Eine dynamische Anpassung der Lampenparameter in einem Lampenmodell anhand gemessener Parameter ist auch bei einem eventuellen Lampenwechsel sehr vorteilhaft. Bisher musste in einem solchen Fall ein neues Modell mit entsprechenden Tabellen angefertigt werden. Bei der dynamischen Anpassung kann die Lampe jedoch automatisch ausgemessen werden und das Modell kann sich automatisch anpassen. Durch eine solche Modellanpassung können die Lampen auch vorteilhaft länger im Einsatz bleiben. Ferner können überwachte Parameter wie z.B. die Pₛₜᵣ aus Fig. 4 oder davon abhängige Einzelmodellparameter bzw. Modellparameter zur Überwachung der Schnellheizanlage dienen, so daß z.B. ein Wechseln von Lampen angezeigt werden kann, wenn Einzelmodellparameter außerhalb vordefinierter oder angepaßter Grenzbereiche liegen.

Bei der in Fig. 7 dargestellten Vorsteuerung wurde nur die Kopplung der Waferunterseite an die Lampenstrahlung berücksichtigt.

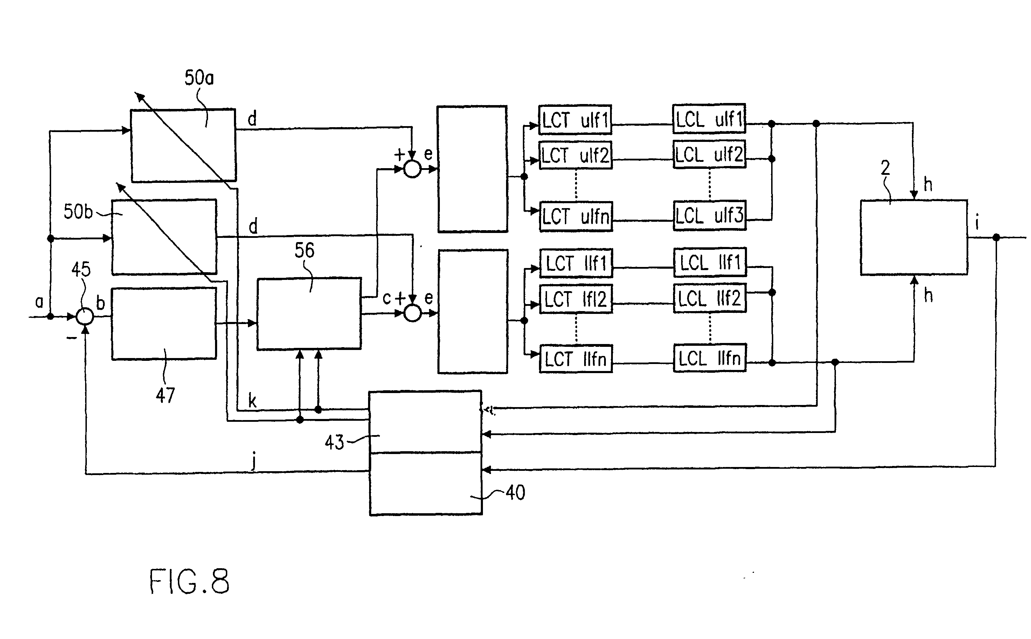

Fig. 8 zeigt ein System, bei dem neben der Kopplung der Waferunterseite auch die Kopplung der Waferoberseite an die Lampenstrahlung berücksichtigt wird. In Fig. 8 werden die selben Bezugszeichen wie in Fig. 7 verwendet, sofern gleiche oder ähnliche Elemente betroffen sind.

Eine getrennte Betrachtung der Kopplung ist besonders bei Wafern von Vorteil, bei denen die Oberseite und Unterseite unterschiedliche Materialschichten aufweisen und daher die optischen Eigenschaften des Wafers auf beiden Seiten unterschiedlich sind. Insbesondere in der Halbleitertechnik sind in vielen Fällen die Wafervorderseiten mit einer oder mehrerer Schichten unterschiedlicher Materialien versehen, während die Rückseite des Wafers unbehandelt ist. Außerdem kann eine der Oberflächen mikroskopische Strukturen aufweisen, während die andere Oberfläche flach ist. Berücksichtigt man diese Unterschiede in zwei getrennten Modellen für die Vorsteuerung, lässt sich die Regelung der Wafertemperatur noch weiter verbessern. Da sich die Ankopplung des Wafers an die Lampenstrahlung aus einem Durchschnittswert der Vorder- und der Rückseite ergibt, kann der Vorsteuerwert aus dem Durchschnittswert der zwei voneinander unabhängigen Kopplungsmessungen ermittelt werden.

Wie in Fig. 8 dargestellt ist, wird die von den oberen und unteren Lampenbänken emittierte Strahlung h getrennt ermittelt und für eine Ermittlung der Kopplung zwischen Lampenstrahlung und Wafer herangezogen. Aus diesen Werten ergeben sich unterschiedliche Anpassungen der Vorwärtsregelung für die obere und die untere Lampenbank in den Vorsteuerreglern 50a bzw. 50b. Darüber hinaus ergibt sich eine unterschiedliche Ansteuerung der oberen und unteren Lampenbänke über eine Verteilereinheit 56.

Durch die unterschiedlichen Vorgaben für die Stellgröße der Lampenstrahlung für die obere und untere Lampenbank wird eine gleichmäßigere Erwärmung der Vorder- und Rückseite des Wafers 2 sichergestellt. Dies ist besonders bei sehr kleinen Strukturen vorteilhaft.

Die Erfindung wurde zuvor anhand bevorzugter Ausführungsbeispiele der Erfindung beschrieben, ohne jedoch auf diese Ausführungsbeispiele beschränkt zu sein. Beispielsweise könnten bei einer weiteren Ausführungsform Datenübertragungsraten sowie Rechenzeiten einzelner Systemkomponenten berücksichtigt werden und als Parameter in das Modell für die Vorsteuerung einfließen. Vorteilhaft könnte auch die Messung von Anlagenparametem sein, die keinen direkten Bezug auf die Stellgröße haben. So können Verunreinigungen der Quarzkammer, die im Laufe des Prozesses auftreten und die Transmission der Lampenstrahlung beeinflussen, im Modell durch geeignete Parameter vorgesehen werden, die dann messtechnisch z.B. durch Reflektions- oder Transmissionsmessungen erfasst werden und auf den Regelkreis mit einwirken. Für eine ideale Temperatursteuerung des Wafers sollten möglichst viele Einzelkomponenten des Systems berücksichtigt werden, wobei hier ein Kompromiss zwischen Regelaufwand und Erfolg gefunden werden muss. Ferner können wie oben anhand des Lampenmodells über die (Einzel-) Modelle Systemüberwachungsfunktionen wie z.B. Wartungsintervalle integriert werden. Schließlich können die einzelnen Merkmale der oben beschriebenen Ausführungsformen untereinander kombiniert werden.

## Patentansprüche

1. Verfahren zum thermischen Behandeln von von Halbleiterwafern in einer Schnellheizanlage, bei dem die Halbleiterwafer mit einem vorgegebenen Temperaturverlauf thermisch behandelt werden und die Temperatur des Halbleiterwafers mit einer Temperaturregelung und einer Vorwärtssteuerung geregelt wird, die auf einem Simulations-Modell aus Heizvorrichtung und Objekt basiert, **dadurch gekennzeichnet, daß** das Simulations-Modell wenigstens ein Einzelmodell umfaßt, welches Komponenten der Heizvorrichtung und/oder des Halbleiterwafers umfaßt, und daß wenigstens ein Parameter wenigstens eines der Einzelmodelle während der thermischen Behandlung überwacht wird und daß das Simulations-Model wenigstens an einen überwachten Parameter angepaßt wird.

2. Verfahren nach Anspruch 1, **dadurch gekennzeichnet, daß** der Halbleiterwafer mit wenigstens einer Heizlampe bestrahlt wird.

3. Verfahren nach Anspruch 2, **dadurch gekennzeichnet, daß** für wenigstens eine Heizlampe ein Einzelmodell vorgesehen ist und daß Betriebsparameter, insbesondere die abgestrahlte Heizleistung, der Heizlampe überwacht werden.

4. Verfahren nach einem der vorhergehenden Ansprüche, **dadurch gekennzeichnet, daß** Parameter des zu behandelnden Halbleiterwafers, insbesondere dessen optische Eigenschaften überwacht werden.

5. Verfahren nach Anspruch 4, **dadurch gekennzeichnet, daß** die Kopplung des Halbleiterwafers an die Heizstrahlung ermittelt wird.

6. Verfahren nach Anspruch 4 oder 5, **dadurch gekennzeichnet, daß** die Parameter auf gegenüberliegenden Seiten des Halbleiterwafers getrennt voneinander ermittelt werden.

7. Verfahren nach einem der vorhergehenden Ansprüche, **dadurch gekennzeichnet, daß** Datenübertragungszeiten und/oder Rechenzeiten ermittelt werden.

8. Verfahren nach einem der vorhergehenden Ansprüche, **dadurch gekennzeichnet, daß** Temperaturen des Halbleiterwafers unter 400°C nachträglich berechnet werden.

9. Vorrichtung zum thermischen Behandeln von von Halbleiterwafern (2), mit einer Heizvorrichtung (1), insbesondere einer Schnellheizvorrichtung, einer Regeleinheit mit einem PID-Regler (47) und einem Vorwärts-Regler (50), der ein Simulationsmodell aus Heizvorrichtung (1) und Halbleiterwafer (2) verwendet, **gekennzeichnet durch** wenigstens eine Überwachungseinheit, zum Abtasten von für das Simulationsmodell relevanten Parametern von Komponenten der Heizvorrichtung (1) und/oder des Halbleiterwafers (2), zum Vergleichen der gemessenen Parameter mit den Parametern des Simutationsmodels und zum Anpassen der Parametern des Simulationsmodels an die gemessenen Parameter.

10. Vorrichtung nach Anspruch 9, **gekennzeichnet durch** wenigstens eine Heizlampe.

11. Vorrichtung nach Anspruch 10, **dadurch gekennzeichnet, daß** die Überwachungseinheit wenigstens einen Sensor (10) zum Messen von Betriebsparametern, insbesondere der abgestrahlten Heizleistung, wenigstens einer Heizlampe aufweist.

12. Vorrichtung nach einem der Ansprüche 9 bis 11, **dadurch gekennzeichnet, daß** die Überwachungseinheit wenigstens einen Sensor (11) zum Messen von Parameter des zu behandelnden Halbleiterwafer (2), insbesondere dessen optischen Eigenschaften, aufweist.

13. Vorrichtung nach Anspruch 12, **dadurch gekennzeichnet, daß** zwei Sensoren vorgesehen sind, um die Parameter auf gegenüberliegenden Seiten des Halbleiterwafer (2) zu ermitteln.

## Claims

1. Method for thermal treatment of semiconductor wafers in a fast-heating plant, in which the semiconductor wafers are thermally treated with a predetermined temperature course and the temperature of the semiconductor wafer is regulated by a temperature regulation and a forward control, which is based on a simulation model of heating device and object, **characterised in that** the simulation model comprises at least one individual model which comprises components of the heating device and/or the semiconductor wafer and that at least one parameter of at least one of the individual models is monitored during the thermal treatment and that the simulation model is adapted at least to a monitored parameter.

2. Method according to claim 1, **characterised in that** the semiconductor wafer is irradiated by at least one heating lamp.

3. Method according to claim 2, **characterised in that** an individual model is provided for at least one heating lamp and that operating parameters, particularly the irradiated heat output, of the heating lamp are monitored.

4. Method according to one of the preceding claims, **characterised in that** the parameters of the semiconductor wafer to be treated, in particular the optical properties thereof, are monitored.

5. Method according to claim 4, **characterised in that** the coupling of the semiconductor wafer to the heat radiation is ascertained.

6. Method according to claim 4 or 5, **characterised in that** the parameters on opposite sides of the semiconductor wafer are ascertained separately from one another.

7. Method according to one of the preceding claims, **characterised in that** data transfer times and/or computing times are ascertained.

8. Method according to one of the preceding claims, **characterised in that** the temperatures of the semiconductor wafer below 400° C are calculated subsequently.

9. Device for thermal treatment of semiconductor wafers (2), with a heating device (1), particularly a fast-heating device, a regulating unit with a PID regulator (47) and a forward regulator (50), which uses a simulation model of heating device (1) and semiconductor wafer (2), **characterised by** at least one monitoring unit for the scanning of parameters, which are relevant for the simulation model, of components of the heating device (1) and/or of the semiconductor wafer (2), for comparing the measured parameters with the parameters of the simulation model and for adaptation of the parameters of the simulation model to the measured parameters.

10. Device according to claim 9, **characterised by** at least one heating lamp.

11. Device according to claim 10, **characterised in that** the monitoring unit comprises at least one sensor (10) for measuring operating parameters, particularly of the irradiated heat output, of at least one heating lamp.

12. Device according to one of claims 9 to 11, **characterised in that** the monitoring unit comprises at least one sensor (11) for measuring parameters of the semiconductor wafer (2) to be treated, particularly the optical properties thereof.

13. Device according to claim 12, **characterised in that** two sensors are provided in order to ascertain the parameters on opposite sides of the semiconductor wafer (2).

## Revendications

1. Procédé de traitement thermique de plaquettes en semiconducteur dans une installation de chauffage rapide, où les plaquettes en semiconducteur sont traitées thermiquement conformément à une courbe de température prédéterminée, et la température de la plaquette en semiconducteur est réglée au moyen d'un réglage de la température et d'une commande vers l'avant, qui est basée sur un modèle de simulation formé par le dispositif de chauffage et l'objet, **caractérisé en ce que** le modèle de simulation comprend au moins un modèle individuel, qui comprend les composants du dispositif de chauffage et/ou de la plaquette en semiconducteur, et **en ce qu'**au moins un paramètre d'au moins l'un des modèles individuels est surveillé pendant le traitement thermique, et **en ce que** le modèle de simulation est adapté à au moins un paramètre surveillé.

2. Procédé selon la revendication 1, **caractérisé en ce que** la plaquette en semiconducteur est irradiée avec au moins une lampe de chauffage.

3. Procédé selon la revendication 2, **caractérisé en ce qu'**il est prévu pour au moins une lampe de chauffage un modèle individuel, et **en ce que** des paramètres de fonctionnement, notamment la puissance de chauffage rayonnée, de la lampe de chauffage sont surveillées.

4. Procédé selon l'une des revendications précédentes, **caractérisé en ce que** des paramètres de la plaquette en semiconducteur, notamment ses caractéristiques optiques, sont surveillés.

5. Procédé selon la revendication 4, **caractérisé en ce que** le couplage de la plaquette en semiconducteur au rayonnement chauffant est déterminé.

6. Procédé selon la revendication 4 ou 5, **caractérisé en ce que** les paramètres sur des côtés opposés de la plaquette en semiconducteur sont déterminés séparément.

7. Procédé selon l'une des revendications précédentes, **caractérisé en ce que** des durées de transmission de données et/ou des durées de calcul sont déterminées.

8. Procédé selon l'une des revendications précédentes, **caractérisé en ce que** des températures de la plaquette en semiconducteur inférieures à 400°C sont calculées postérieurement.

9. Dispositif de traitement thermique de plaquettes en semiconducteur (2) avec un dispositif de chauffage (1), en particulier un dispositif de chauffage rapide, une unité de régulation avec un régulateur PID (47) et un régulateur d'avancement (50), qui utilise un modèle de simulation formé par le dispositif de chauffage (1) et la plaquette en semiconducteur (2), **caractérisé par** au moins une unité de surveillance, pour balayer des paramètres, importants pour le modèle de simulation, de composants du dispositif de chauffage (1) et/ou de la plaquette en semiconducteur (2), pour comparer les paramètres mesurés aux paramètres du modèle de simulation et pour adapter les paramètres du modèle de simulation aux paramètres mesurés.

10. Dispositif selon la revendication 9, **caractérisé par** au moins une lampe de chauffage.

11. Dispositif selon la revendication 10, **caractérisé en ce que** l'unité de surveillance présente au moins un capteur (10) pour mesurer des paramètres de fonctionnement, notamment la puissance de chauffe rayonnée d'au moins une lampe de chauffage.

12. Dispositif selon l'une des revendications 9 à 11, **caractérisé en ce que** l'unité de surveillance présente au moins un capteur (11) pour mesurer des paramètres de la plaquette en semiconducteur (2) à traiter, notamment ses caractéristiques optiques.

13. Dispositif selon la revendication 12, **caractérisé en ce que** deux capteurs sont prévus pour déterminer les paramètres sur des côtés opposés de la plaquette en semiconducteur (2).
